# EUROPÄISCHE PATENTSCHRIFT

(11) **EP 3 755 496 B1**
(45) Veröffentlichungstag und Bekanntmachung des Hinweises auf die Patenterteilung: **11.08.2021**
(21) Anmeldenummer: 18707350.7
(22) Anmeldetag: 23.02.2018
(51) Int. Cl.: B23P 19/06, B25B 21/00, B25B 23/14

(54) **VIELFACHSCHRAUBWERKZEUG**
MULTIPLE SCREWDRIVER
OUTIL DE VISSAGE POLYVALENT

(43) Veröffentlichungstag der Anmeldung: 30.12.2020
(73) Patentinhaber: Heico Befestigungstechnik Gmbh, 59469 Ense-Niederense (DE)
(72) Erfinder: VORNWEG, Stefan, 59469 Ense-Niederense (DE)
(74) Vertreter: Haverkamp, Jens
(86) Internationale Anmeldenummer: PCT/EP2018/054510
(87) Internationale Veröffentlichungsnummer: WO 2019/161911

(56) Entgegenhaltungen:
- WO-A2-2009/135201
- DE-A1- 10 236 585
- FR-A1- 3 012 189
- US-B1- 7 146 880

## Beschreibung

Die Erfindung betrifft ein Vielfachschraubwerkzeug mit mehreren, um ein Zentrum angeordneten, endseitig mit jeweils einem Spannwerkzeug bestückbaren oder bestückten Antriebsspindeln und einem jeder Antriebsspindel zugeordneten, mittels eines hydraulischen Kolbenantriebs angetriebenen Ratschenantrieb zum Antreiben der Antriebsspindeln. Ein solches Vielfachschraubwerkzeug ist aus EP 2 288 476 bekannt.

Vielfachschraubwerkzeuge dienen dem Zweck, mit einem einzigen Schraubvorgang eine Mehrzahl an Schraubverbindungen zu spannen und somit beispielsweise Bolzen, die in einer Ringanordnung angeordnet sind, einzuschrauben oder auch zu lösen. Das gleichzeitige Spannen einer Mehrzahl von Schraubverbindungen führt nicht nur zu einer Verkürzung der zum Spannen mehrerer Schraubverbindungen ansonsten benötigten Zeit. Beim Spannen einzelner Schraubverbindungen, die ringförmig um ein Zentrum angeordnet sind, ist zudem darauf zu achten, dass die miteinander zu verspannenden Bauteile nicht verkanten, weshalb die Schraubverbindungen gemäß einem vorgegebenen Spannmuster gespannt werden müssen. Wird dieses nicht eingehalten, besteht die Gefahr, dass ein aus mehreren Schraubverbindungen bestehender Verbund nicht ordnungsgemäß gespannt wird.

Vielfachschraubwerkzeuge werden beispielsweise zum Verbinden von Steigrohren bei Erdöl oder Brunnenbohrungen verwendet. Diese Rohre verfügen an ihren Enden jeweils über einen in radialer Richtung nach außen abragenden Verbindungsflansch. Die aneinandergrenzenden Verbindungsflansche werden zum Verbinden zweier derartige Rohre mit mehreren Schraubverbindungen miteinander verspannt. Ein für diese Zwecke geeignetes Vielfachschraubwerkzeug ist aus EP 2 288 476 B1 bekannt. Bei diesem vorbekannten Vielfachschraubwerkzeug ist eine der Anzahl der zu spannenden Schrauben entsprechende Anzahl an Spanneinrichtungen vorgesehen, beispielsweise sechs Spannstationen. Die Spannstationen sind um ein Zentrum angeordnet. Diese vorbekannte Spanneinrichtung ist ringförmig konzipiert und belässt eine zentrale Öffnung, durch die die Rohre mit ihren Flanschen hindurchgezogen werden können. Jede Spannstation ist in radialer Richtung verfahrbar, damit diese aus einer Nicht-Benutzungsstellung, in der durch eine zentrale Öffnung des Vielfachschraubwerkzeuges ein Steigrohr mit seinem Flansch hindurchgeführt werden kann, in eine Benutzungsstellung zum Spannen der Schraubbolzen verstellt werden kann. Zum Spannen der Schraubverbindungen von zwei aneinandergrenzenden Verbindungsflanschen zweiter Steigrohre werden die Spannstationen in radialer Richtung in ihre Spannposition verfahren. Jede Spannstation verfügt über eine Antriebsspindel, die als Spannwerkzeug eine Nuss antreibt. Die Nuss hat eine Innenmitnehmerkontur, die komplementär zu der Mitnehmerkontur des Kopfes eines zu spannenden Schraubbolzens ist, der durch die Spannstation gespannt werden soll.

Angetrieben ist jede Antriebsspindel durch einen eigenen hydraulisch betätigten Ratschenantrieb. Angeschlossen ist zu diesem Zweck an den Ratschenhebel des Ratschenantriebes die Kolbenstange eines hydraulisch betätigten Kolbens. Der Ratschenhebel verfügt über eine Mitnehmerklaue, die eine in dem Ratschenhebel drehbar gelagerte Antriebsspindel antreibt. Die Antriebsspindel verfügt über eine quadratische Öffnung, in die der Antriebsstift mit einer komplementären Mitnehmergeometire einer Nuss als Spannwerkzeug eingesteckt werden kann. Die Mitnehmerklaue steht unter Federvorspannung und wirkt unter der Federvorspannung mit einer Außenzahnung der Antriebsspindel zusammen. Mit einem Vorhub der Kolbenstange wird die Antriebsspindel entsprechend dem ausgeführten Hub um zumindest einen Zahn gegenüber der Mitnehmerklaue weiterbewegt. Mit dem Rückhub wird der Ratschenhebel wieder in seine Ausgangsstellung gebracht, während der Bolzen nicht zurückdreht. Dieser Wechsel zwischen Vor- und Rückhub wird so lange ausgeführt, bis der Spannbolzen mit der vorgesehenen Spannkraft angezogen ist.

Mitunter ist das Anlegen eines hinreichend hohen Drehmomentes auf die Spannverbindung nicht möglich, und zwar dann, wenn beim Rückführen eines Ratschenhebels nach Ausüben einer Vorhubbewegung zum Bewegen der Antriebsspindeln etwa eines zu spannenden Schraubbolzens auf Grund der in den Schraubbolzen und auch in die Antriebsspindel eingebrachten Torsion diese zurückfedert. Dann kann die Mitnehmerklaue bei Ausüben einer auf den Ratschenhebel wirkenden Rückhubbewegung nicht mehr um zumindest einen Zahn der Zahnung der Antriebsspindel zurückbewegt werden. Die Vorhub- und Rückhubbewegung des Stellzylinders wird zwar ordnungsgemäß ausgeführt, ein höheres Drehmoment wird jedoch in die Schraubverbindung nicht eingebracht.

Aus US 7,146,880 B1 ist ein Einfachschraubwerkzeug bekannt, bei dem auf die Antriebsspindel neben dem Ratschenantrieb eine Sicherungsratsche wirkt. Durch diese ist ein Zurückfedern der Antriebsspindel in Folge in diese und/oder die Schraubverbindung, etwa dem Schraubbolzen eingebrachte Torsion blockiert. Eine solche Einrichtung eignet sich jedoch nicht für eine Rückdrehsicherung der Antriebsspindeln von Vielfachschraubwerkzeugen, da auf Grund der beim Spannen auftretenden Reaktionskräfte die Spannwerkzeuge mit den jeweiligen zu spannenden Schraubbolzen bzw. dessen Kopf verklemmt sind und daher ein Abziehen des Vielfachschraubwerkzeuges von den Bolzenköpfen nicht mehr möglich ist.

Ausgehend von diesem diskutierten Stand der Technik liegt der Erfindung daher die Aufgabe zu Grunde, ein Vielfachschraubwerkzeug mit mehreren, um ein Zentrum angeordneten Antriebsspindeln der eingangs genannten Art dergestalt weiterzubilden, dass mit diesem auch Schraubverbindungen mit hohen Drehmomenten gespannt werden können, ohne ein Rückfedern der Antriebsspindeln in Kauf nehmen zu müssen, wobei das Vielfachschraubwerkzeug dennoch nach einem Spannvorgang ohne weiteres von den gespannten Schraubbefestigern abgenommen werden kann.

Gelöst wird diese Aufgabe erfindungsgemäß durch ein eingangs genanntes, gattungsgemäßes Vielfachschraubwerkzeug, bei dem auf jede Antriebspindel zusätzlich zu dem Ratschenantrieb eine Verriegelungsratsche zum Verriegeln der Antriebsspindel gegen ein Zurückdrehen beim Ausüben einer Rückhubbewegung der Antriebsratsche wirkt, welche Verriegelungsratschen in einem ringförmigen, von den Antriebsspindeln durchgriffenen Verriegelungsträger angeordnet sind, und bei dem der Verriegelungsträger über Mittel zum Lösen der Verriegelungsratschen verfügt.

Vorteilhafte Ausführungsformen des Vielfachschraubwerkzeugs sind Gegenstand der abhängigen Ansprüche.

Bei diesem Vielfachschraubwerkzeug wirkt auf jede Antriebsspindel neben dem Ratschenantrieb eine Verriegelungsratsche. Die Ratsche des Ratschenantriebs sowie die Verriegelungsratsche wirken jeweils in derselben Richtung auf die Antriebsspindel. Sowohl die Mitnehmerklaue des Ratschenantriebes als auch die Verriegelungsratsche mit einer Verriegelungsklaue stehen mit einer Außenzahnung der Antriebsspindel in Eingriff. Die Mitnehmerklaue des Ratschenantriebes und die Verriegelungsklaue der Verriegelungsratsche greifen gleichermaßen in eine Zahnung der Antriebsspindel ein. Dies bedeutet, dass bei Ausüben eines Rückhubes des Ratschenhebels des Ratschenantriebes ein Zurückfedern, beispielsweise durch eine zuvor darin induzierte Torsionskraft der Antriebsspindel durch die Verriegelungsratsche blockiert ist. Die Verriegelungsratschen dieses Vielfachschraubwerkzeuges sind in einem Verriegelungsträger angeordnet, der von den Antriebsspindeln durchgriffen ist. Der Verriegelungsträger folgt somit der Anordnung der um ein Zentrum angeordneten Antriebsspindel. Typischerweise ist der Verriegelungsträger ringförmig. Durchaus möglich ist jedoch auch eine Ausgestaltung, bei der dieser sich nur über ein Kreissegment erstreckt. Auch bei einer solchen Ausgestaltung sind die Antriebsspindeln um ein Zentrum herum angeordnet, jedoch nicht zu einer Ringstruktur, sondern nur zu einer Kreissegmentstruktur angeordnet. Das Vorsehen eines Verriegelungsträgers, in dem die Verriegelungsratschen angeordnet sind, erlaubt, dass dieser über Mittel zum Lösen der Verriegelungsratschen verfügt. Mit diesen Mitteln können die Verriegelungsklauen aus ihrer in eine Außenverzahnung der Antriebsspindel eingreifenden Stellung herausbewegt werden. Zu diesem Zweck sind die Verriegelungsklauen in dem Verriegelungsträger typischerweise translatorisch gegen die Kraft einer Rückstellfeder gehalten, gegen welche Federkraft die Verriegelungsklauen aus ihrer verriegelnden Stellung mit dem Eingriff ihrer Zähne in eine Außenverzahnung der Antriebsspindel herausbewegt werden. Die Führung einer Verriegelungsklaue innerhalb des Verriegelungsträgeres wird typischerweise durch die Wände der Verriegelungskammer bereitgestellt, in die eine solche Verriegelungsklaue eingesetzt ist. Eine solche Verriegelungskammer stellt eine Erweiterung in radialer Richtung zu einem Antriebsspindeldurchbruch dar.

In einem Ausführungsbeispiel ist jeder Verriegelungsratsche ein Rückstellhebel zugeordnet, mit dem die Verriegelungsklaue aus der Ineingriffstellung ihrer Zähne mit denjenigen der Antriebsspindel herausgerückt werden kann. Zu diesem Zweck verfügt die Verriegelungsklaue über zumindest eine Stellfläche, an der ein solcher Rückstellhebel zum Herausbewegen der Verriegelungsklaue aus ihrer Ineingriffstellung mit der Zahnung der Antriebsspindel angreift. In einer Ausführung sind zwei Stellflächen vorgesehen, von denen jeweils eine beidseitig zu einem mittleren, die Zähne der Verriegelungsklaue tragenden Teil angeordnet ist. Bei einer Ausführung einer solchen Ausgestaltung greifen die Rückstellhebel jeweils in eine Rückstellhebelaufnahme des Verriegelungsträgers ein, welche Rückstellhebelaufnahme in radialer Richtung des Verriegelungsträgeres außenseitig bezüglich der Verriegelungsklaue angeordnet ist. Das andere Ende des Rückstellhebels steht über den Verriegelungsträger in radialer Richtung innenseitig hervor und greift in eine Rückstellhebelaufnahme eines in radialer Richtung innenseitig zu dem Verriegelungsträger angeordneten und mit einem gewissen Winkelbetrag um das Zentrum der Anordnung der Antriebsspindeln verstellbares Stellelement ein. Bei einer Ausgestaltung, bei der der Verriegelungsträger ringförmig ist, ist das Stellelement ebenfalls ringförmig. Das Stellelement ist gegenüber dem Verriegelungsträger um die Achse des Zentrums der Anordnung der Antriebsspindeln um zumindest einige Winkelgrade verstellbar, wobei der Verstellbetrag hinreichend groß ist, damit bei einer Drehwinkelverstellung des Stellelementes gegenüber dem Verriegelungsträger dessen Rückstellhebelaufnahme mit dem darin eingreifenden Endabschnitt eines Rückstellhebels soweit bewegt werden kann, dass auf Grund der Abstützung des Rückstellhebels an einer Stellfläche der Verriegelungsklaue diese aus ihrer Ineingriffstellung mit der Außenzahnung der Antriebsspindel herausbewegt wird. Typischerweise ist der Rückstellhebel gewinkelt ausgeführt, wobei die Winkelaußenseite gegen die Stellfläche der Verriegelungsklaue wirkt. Sind zwei Stellflächen bei der Verriegelungsklaue vorgesehen, werden dementsprechend zwei Rückstellhebel zum Bewegen der Verriegelungsklaue eingesetzt.

Eine Verstellbewegung des beispielsweise als Stellring ausgeführten Stellelementes kann durch einen Stellnocken herbeigeführt werden, der in eine Nockenaussparung des Stellringes eingreift. Eine solche Stellnocke ist quer zur Zentrumsachse der Anordnung der Antriebsspindeln drehbar gehalten und sitzt typischerweise auf dem Endabschnitt einer den Verriegelungsträger durchgreifenden Stellstange, die außenseitig eine Handhabe, beispielsweise einen Drehknauf trägt, über welche Handhabe eine Drehbewegung in die Stellstange eingebracht und der Stellnocken verstellt werden kann.

Vor einer Betätigung der Stellstange zum Lösen der Verriegelungsratschen werden die Antriebsspindeln über die Antriebsratschen etwas gespannt, um die Verriegelungsratschen zu entlasten und sodann den Löseprozess durch Verstellen des Stellelementes durchführen zu können.

Bei einer kompakten Auslegung des Antriebsblockes des Vielfachschraubwerkzeuges wird man typischerweise die Verriegelungsratschen mit dem Verriegelungsträger in Bezug auf die Längserstreckung der Antriebsspindeln in eine andere Ebene zu den Ratschenantrieben anordnen. Bei einer Auslegung des Vielfachschraubwerkzeuges, bei dem die Ratschenantriebe in zwei oder auch mehreren Ebenen übereinanderliegend angeordnet sind, können dennoch die Verriegelungsratschen und der diese tragende Verriegelungsträger in einer gemeinsamen Ebene angeordnet sein. Bei einer Auslegung des Vielfachschraubwerkzeuges, bei dem die Verriegelungsratschen in einer anderen Ebene bezüglich der Längserstreckung der Antriebsspindel zu den Ratschenantrieben angeordnet sind, eine sich in beide Ebenen erstreckende Außenverzahnung oder zwei Außenverzahnungsabschnitte auf.

In einer Weiterbildung dieses vorbeschriebenen Vielfachschraubwerkzeuges ist vorgesehen, dass das Vielfachschraubwerkzeug eine Zustelleinheit zum Induzieren einer Drehbewegung in die Antriebsspindeln mit einem um die Achse des Zentrums der ringförmigen Antriebsspindeln drehbar gelagerten Stellrad als Antriebsrad umfasst, das jeweils ein auf der Antriebsspindel sitzendes Abtriebsrad antreibt, wobei die Übertragung der Antriebsbewegung des Stellrades auf die Antriebsspindel unter Zwischenschaltung jeweils eines Drehmomentbegrenzers erfolgt.

Dieses Vielfachschraubwerkzeug verfügt über eine Zustelleinheit, die vor Beginn des eigentlichen Spann- oder Lösevorgangs betätigt wird. Mit der Zustelleinheit können die Antriebsspindeln bewegt werden. Zu diesem Zweck verfügt die Zustelleinheit über ein Stellrad, welches um die Achse des Zentrums der ringförmigen Antriebsspindeln drehbar gelagert ist. Dieses Stellrad ist ein Antriebsrad und treibt jeweils ein auf einer Antriebsspindel sitzendes Abtriebsrad an. Auf diese Weise kann eine Antriebsbewegung des Stellrades auf die Antriebsspindeln übertragen werden. Von Besonderheit bei der Zustelleinheit ist, dass die Übertragung der Antriebsbewegung des Stellrades auf die Antriebsspindeln unter Zwischenschaltung jeweils eines Drehmomentbegrenzers erfolgt. Dieser dient dem Zweck, dass mittels der Zustelleinheit die zu spannenden Schraubverbindungen mit einem ersten gleichen Drehmoment gespannt werden können. Das Stellrad kann manuell, beispielsweise mit einer Knarre als Antriebswerkzeug oder auch mit einem elektrischen Schraubwerkzeug betätigt werden. Eine Betätigung kann selbstverständlich auch hydraulisch oder pneumatisch erfolgen. Das in das Stellrad eingeleitete Drehmoment ist begrenzt. Durch die Drehbewegung des Stellrades und der dadurch bewirkten Drehbewegung der Antriebsspindeln bei über die Rutschkupplungen übertragenen Drehmoment werden die auf den Antriebsenden der Antriebsspindeln sitzenden Spannwerkzeuge gedreht. Bei den Spannwerkzeugen handelt es sich typischerweise um Federspannwerkzeuge, die gegen die Kraft einer Rückstellfeder auf der Antriebsspindel in längsaxialer Richtung über einen gewissen Betrag verstellt werden können. Wird beim Betätigen der Zustelleinrichtung das Vielfachspannwerkzeug mit leichtem Druck auf die Spannwerkzeuge diese gegen die Spannelemente, beispielsweise die Spannbolzen gehalten, springen die bei dieser Ausgestaltung als Nüsse ausgeführten Spannwerkzeuge auf die Bolzenköpfe, wenn die komplementären Mitnahmekonturen miteinander fluchten. Somit können bei einer Betätigung der Zustelleinheit mit einem geringen, insbesondere manuell in das Stellrad eingebrachten Drehmomentes die Spannwerkzeuge ohne weiteres komplementären Mitnahekonturen eines Spannelementes finden und miteinander in Eingriff gestellt werden.

Die Erfindung ist nachfolgend anhand eines Ausführungsbeispiels unter Bezugnahme auf die beigefügten Figuren beschrieben. Es zeigen:
- **Fig. 1:**: Eine Längsschnittdarstellung durch ein Vielfachschraubwerkzeug,
- **Fig. 2:**: einen Querschnitt durch das Vielfachschraubwerkzeug der Figur 1 entlang der Linie A-B,
- **Fig. 3:**: einen weiteren Querschnitt durch das Vielfachschraubwerkzeug der Figur 1 entlang der Linie C-D zum Darstellen einer Verriegelungseinrichtung zum Verriegeln der Antriebsspindeln in Verriegelungsstellung und

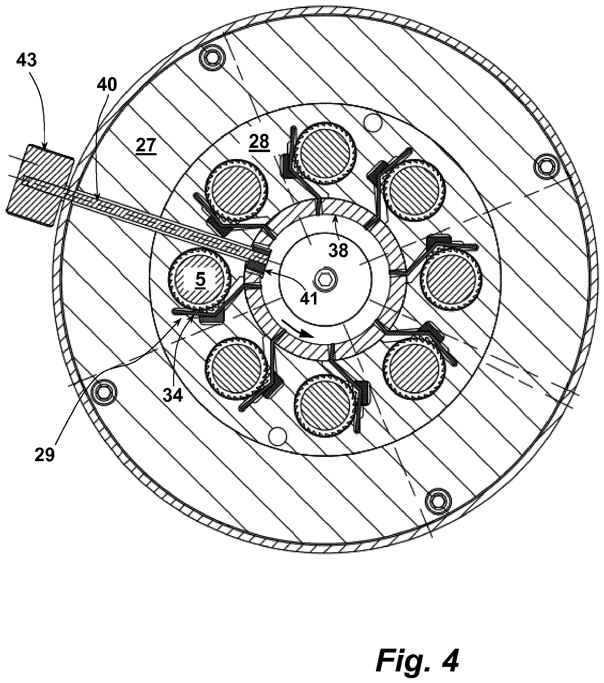

- **Fig. 4:**: die Darstellung der Figur 3 mit entriegelten Verriegelungseinrichtungen.

Ein Vielfachschraubwerkzeug 1 ist bei dem in den Figuren dargestellten Ausführungsbeispiel modular aufgebaut und umfasst einen Antriebsblock 2 als erstes Modul, eine Verriegelungseinheit 3 als zweites Modul sowie eine Zustelleinheit 4 als drittes Modul. Die einzelnen Module 2, 3, 4 werden nachstehend erläutert. Auch wenn diese im Rahmen dieser Ausführungen miteinander zur Ausbildung des Vielfachschraubwerkzeuges 1 kombiniert sind, können die Einzelmodule 2, 3, 4 auch unabhängig voneinander zusammen mit auch anders konzipierten Bestandteilen eines Vielfachschraubwerkzeuges verwendet werden. Beispielsweise kann die mit der Verriegelungseinheit 3 bewirkte Funktionalität auch im Zusammenhang mit einem anderen Antriebsblock oder auch ohne Zustelleinheit oder auch mit einer anders gearteten Zustelleinheit kombiniert werden. Gleiches gilt für die Zustelleinheit 3.

### Der Antriebsblock

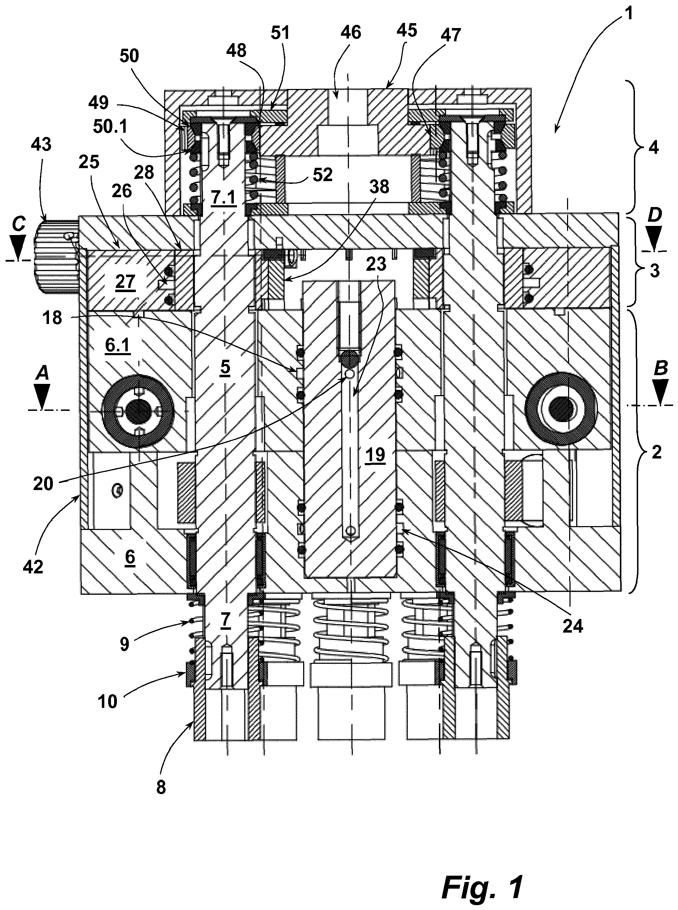

In dem Antriebsblock 2 sind bei dem dargestellten Ausführungsbeispiel acht Antriebsspindeln 5 vorgesehen. Diese sind ringförmig um ein Zentrum angeordnet. In dem Antriebsblock 2 sind diese drehbar gelagert und gehalten. Der Antriebsblock 2 weist eine zylindrische äußere Mantelfläche auf. In der Schnittdarstellung der Figur 1 sind zwei Antriebsspindeln 5 im Schnitt gezeigt, während drei weitere, dahinterliegende in einer Ansicht bzw. Teilansicht erkennbar sind. Nachstehend ist die in Figur 1 linke Antriebsspindel 5 und ihr Antrieb näher beschrieben. Diese Ausführungen gelten gleichermaßen auch für die übrigen Antriebsspindeln 5, die genauso aufgebaut sind wie die nachstehend näher beschriebene Antriebsspindel mit ihrem Antrieb.

Der Antriebsblock 2 ist bei dem dargestellten Ausführungsbeispiel durch zwei Blockscheiben 6, 6.1 bereitgestellt. Die Antriebsspindel 5 durchgreift die miteinander befestigten Blockscheiben 6, 6.1 und ragt aus diesen beidendig heraus. Diese aus dem Antriebsblock 2 herausragenden Abschnitte der Antriebsspindel 5 sind im Rahmen dieser Ausführungen als Antriebsabschnitte 7, 7.1 angesprochen. Auf den in Figur 1 unterseitig aus dem Antriebsblock 2 herausragenden Antriebsabschnitt 7 sitzt als Spannwerkzeug drehmomentschlüssig eine Nuss 8 mit einer innenseitigen Mitnahmekontur. Die Nuss 8 ist lösbar auf dem Antriebsabschnitt 7 in an sich bekannter Weise gehalten, und zwar durch einen durch eine Druckfeder 9 vorgespannten Verriegelungsring 10. Wird der Verriegelungsring 10 in Richtung zu dem Antriebsblock 2 bewegt, löst sich die durch eine in der Figur nicht dargestellte Kugel bewirkte Verriegelung, so dass die Nuss 8 von dem Antriebsabschnitt 7 abgenommen werden kann. Gelagert ist die Antriebsspindel 5 in dem Antriebsblock 2 durch Lager, die an ihren nach außen weisenden Seiten zudem Abstreifer aufweisen können, durch die ein Eindringen von Verschmutzungen in die Lager der Antriebsspindel 5 verhindert ist.

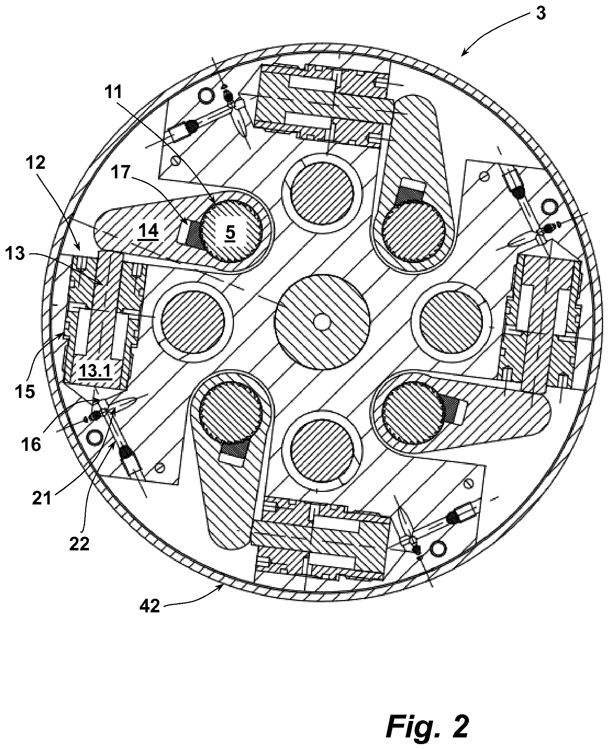

Zum Antreiben der Antriebsspindel 5 dient ein Ratschenantrieb, wie dieser deutlicher anhand der Querschnittdarstellung der Figur 2 beschrieben werden kann. Bei dem dargestellten Ausführungsbeispiel sind vier Ratschenantriebe in der oberen Blockscheibe 6.1 und vier weitere Ratschenantriebe in der unteren Blockscheibe 6 untergebracht. Die Ratschenantriebe selbst sind bei den einzelnen Antriebsspindeln 5 identisch aufgebaut.

Zum Antrieb mittels eines solchen Ratschenantriebes trägt die Antriebsspindel 5 in ihrem Antriebsabschnitt eine umlaufende asymmetrische Außenzahnung 11, wie dieses für Ratschenantriebe typisch ist. Die längeren Zahnflanken weisen in Antriebsrichtung der Antriebsspindel 5. Die kürzeren Zahnflanken weisen in die entgegengesetzte Drehrichtung. Der Ratschenantrieb umfasst eine Kolben-Zylinderanordnung 12, dessen Kolbenstange 13 auf einen Ratschenhebel 14 wirkt. Ein die Kolbenstange 13 tragender Kolben 13.1 sitzt in einem durch einen Einschraubzylinder 15 bereitgestellten Zylindergehäuse. Das Zylindergehäuse 15 verfügt über zwei Fluidanschlüsse, von denen ein Fluidanschluss 16 in dem Schnitt der Figur 2 erkennbar ist. Dieser mündet in den Fußbereich einer den Einschraubzylinder 15 aufnehmenden und in den Antriebsblock 2 eingebrachten Bohrung. Über den Fluidanschluss 16 wird Hydraulikfluid in das Zylindergehäuse 15 zum Bewegen des Kolbens 13.1 mit seiner Kolbenstange 13 zum Ausüben eines Vorhubes zugeführt. Der Hydraulikanschluss für den Rückhub mündet radial in den Einschraubzylinder 15 an der zu dem Fluidanschluss 16 gegenüberliegenden Seite des Kolbens 13.1. Die Kolbenstange 13 ist druck- und zugfest an den Ratschenhebel 14 angeschlossen, so dass ein ausgeübter Vorhub des Kolbens zu einer Vorhubbewegung des Ratschenhebels 14 führt. Durch Ausüben eines Rückhubes wird der Ratschenhebel 14 in seine in Figur 2 gezeigte Position zurückgebracht. Verbunden ist der Kolben 13.1 mit dem Ratschenhebel 14 durch einen Antriebsdorn als Fortsatz der Kolbenstange 13. Dieser Antriebsdorn durchgreift eine Bohrung des Ratschenhebels 14, die in Bewegungsrichtung der Kolbenstange 13 verläuft. Zwischen dem Antriebsdorn und der Kolbenstange 13 befindet sich ein Stellabsatz, mit dem die Kolbenstange 13 zum Übertragen einer Vorhubbewegung gegen einen die vorgenannte Bohrung für den Durchgriff des Antriebsdorns bereitstellenden Bolzen des Ratschenhebels 14 wirkt. Der Dorn durchgreift die Bohrung. Auf seinem aus der Bohrung herausragenden Abschnitt sitzt eine Mitnehmerscheibe, beispielsweise ein Sprengring, durch den bei Ausüben einer Rückhubbewegung mit der Kolbenstange 13 der Ratschenhebel 14 mitgenommen ist.

In den Ratschenhebel 14 ist eine Mitnehmerklaue 17 eingesetzt. Diese greift unter Federvorspannung stehend (in der Figur nicht gezeigt) mit ihrer Klauenzahnung in die Außenzahnung 11 der Antriebsspindel 5 ein. Die Zahnung der Mitnehmerklaue 17 ist komplementär zur Außenzahnung 11 der Antriebsspindel 5 ausgelegt. Bei Ausüben eines Vorhubes der Kolbenstange 13, was zu einer rechtsdrehenden Bewegung des Ratschenhebels 14 führt, wird die Antriebsspindel 5 im Uhrzeigersinne bewegt. Bei dem dargestellten Ausführungsbeispiel wird die Antriebsspindel bei Ausüben eines Vorhubes um einen Zahn weiterbewegt. Bei Ausüben eines Rückhubes wird der Ratschenhebel 14 mit der Mitnehmerklaue 17 in seiner in Figur 2 gezeigten Position zurückgeführt, während die Antriebsspindel 5 in ihrer Position verbleibt, in die diese durch die zuvor ausgeübte Antriebsbewegung gebracht worden ist.

Der in Figur 1 gezeigte Antriebsblock 2 zeigt die Übereinanderanordnung der winkelversetzt zueinander angeordneten Ratschenantriebe in den beiden Blockscheiben 6, 6.1. Der Antriebsblock 2 des Vielfachschraubwerkzeugs 1 verfügt über einen ersten Hydraulikfluidanschluss zum Zuführen von Hydraulikfluid von einer Hydraulikpumpe zum Ausüben des Vorhubes und über einen zweiten Hydraulikanschluss zum Zuführen von Hydraulikfluid zum Ausüben des Rückhubes. Diese Hydraulikanschlüsse sind in der Figur nicht sichtbar. Der Hydraulikfluidanschluss für den Vorhub ist mit einem in radialer Richtung verlaufenden Kanal an einen als Ringkanal 18 ausgeführten Fluidverteilerhohlraum angeschlossen. Der Ringkanal 18 ist in die Wandung einer zentralen in den Antriebsblock 2 eingebrachten Bohrung eingebracht. Die Bohrung ist mit einem zylindrischen Fluidverteiler 19 ausgefüllt. Dieser verfügt über diesen querende Querbohrungen 20 in Höhe des Ringkanals 18. Zu beiden Seiten des Ringkanals 18 sind Dichtringe in Nuten zum Abdichten der Mantelfläche des Fluidverteilers 19 vorgesehen. Der Ringkanal 18 dient für die Zufuhr von für den Vorhub benötigtem Hydraulikfluid der in der Blockscheibe 6.1 angeordneten Kolben-Zylinderanordnungen 12 der Ratschenantriebe. In den Ringkanal 18 münden auch Fluidkanäle, die eine Verbindung zwischen dem Ringkanal 18 und den in der Blockscheibe 6.1 verbauten Kolben-Zylinderanordnungen 12 für den Vorhub herstellen. Eine solche Leitung ist, da gegenüber einer horizontalen Ebene geneigt verlaufend, in einem kleinen Abschnitt 21 in der Figur 2 erkennbar. Die an den Abschnitt 21 grenzende Querbohrung 22 dient zum Herstellen einer Fluidverbindung zwischen dem radialen Verlauf des Abschnittes 21 und dem Fluidanschluss 16 bzw. dem Zylindergehäuse 15. Diese Querbohrung 22 ist an ihrem dem Einschraubzylinder 15 gegenüberliegenden Ende verschlossen. Um die Kolben-Zylinderanordnung der Blockscheibe 6 ebenfalls für den Vorhub mit Hydraulikfluid zu versorgen, dienen die bereits vorstehend angesprochenen Querbohrungen 20. Diese münden in einen zentralen Fluidkanal 23, durch den eine Fluidwegsamkeit zu einem derselben Ebene wie eine zweite Ringkammer 24 in der unteren Blockscheibe 6 hergestellt ist. In die Ringkammer 24 münden ebenfalls vier Fluidkanäle zum Herstellen einer Fluidverbindung zwischen einem ersten Fluidanschluss der in der Blockscheibe 6 aufgenommenen Zylindergehäuse.

Die Kolben-Zylinderanordnungen 12 des Antriebsblockes 2 sind sämtlich gleich ausgeführt. Daher wird für die Ausübung eines Vorhubes von jeder Kolben-Zylinderanordnung dieselbe Hydraulikfluidmenge benötigt.

Der Hydraulikfluidanschluss zum Zuführen von Hydraulikfluid für den Rückhub mündet in einen an die Oberseite der Blockscheibe 6.1 angeschlossenen ringförmigen Fluidverteiler 25. Der Fluidverteiler 25 stellt einen weiteren Ringkanal 26 bereit, in den in der Figur nicht näher dargestellte Fluidkanäle münden, die mit ihrem anderen Ende an jeweils einen Rückhubfluidanschluss eines Einschraubzylinders 15 angeschlossen sind. Während die Fluidkanäle zum Zuführen von Hydraulikfluid an die Kolben-Zylinderanordnungen 12 weitgehend in radialer Richtung verlaufen, verlaufen die Fluidkanäle zum Zuführen des Hydraulikfluids zum Ausüben eines Rückhubes weitgehend in vertikaler Richtung und somit in Richtung der Längserstreckung der Antriebsspindeln 5.

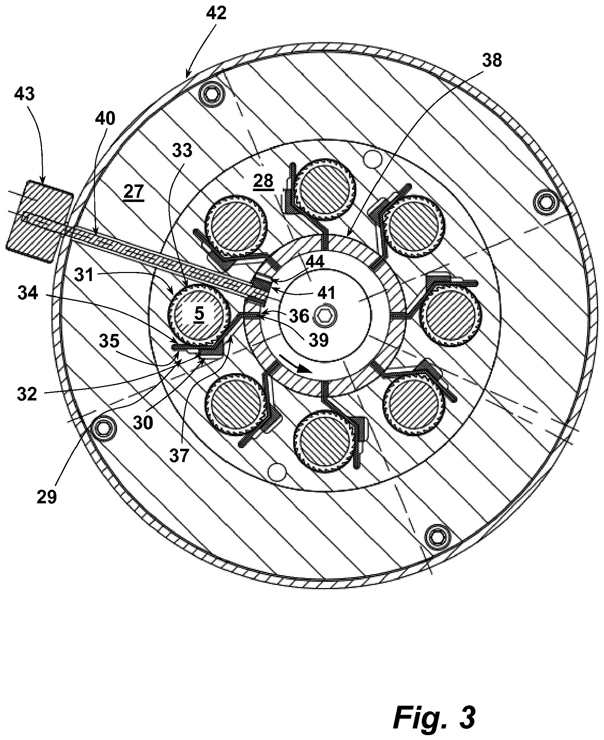

Der Ringkanal 26 wird bei dem dargestellten Ausführungsbeispiel durch zwei konzentrisch zueinander angeordnete Ringkörper 27, 28 bereitgestellt. In den in radialer Richtung außenliegenden Ringkörper 27 ist in dessen Innenwandung die Geometrie des Ringkanals 26 eingebracht. Dieser ist in radialer Richtung innenseitig durch den zweiten Ringkörper 28 mit dessen äußerer Mantelfläche verschlossen. Benachbart zu dem Ringkanal 26 angeordnete Ringdichtungen sorgen für die notwendige Dichtigkeit. Der innenliegende Ringkörper 28 ist, wie aus den Figuren 1 und 3 erkennbar, von den Antriebsspindeln 5 durchgriffen.

### Die Verriegelungseinheit

Der innenliegende Ringkörper 28 stellt bei dem dargestellten Ausführungsbeispiel zugleich einen Verriegelungsträger dar. Die Antriebsspindeln 5 durchgreifen den ringförmigen Verriegelungsträger 28. Der Verriegelungsträger 28 trägt eine jeder Antriebsspindel 5 zugeordnete Verriegelungsratsche 29 zum Verriegeln der jeweiligen Antriebsspindel 5 gegen ein Zurückdrehen bzw. Zurückfedern beim Ausüben einer Rückhubbewegung der Antriebsratsche, also dann, wenn die Mitnehmerklaue mit ihren Zähnen aus der Außenzahnung 11 der Antriebsspindel 5 herausgebracht ist. Jede Verriegelungsratsche 29 umfasst eine Verriegelungskammer 30 als Fortsatz der Durchbrechung 31, der die Antriebsspindel 5 durchgreift. In der Verriegelungskammer 30 sitzt eine Verriegelungsklaue 32, die mit ihrer Zahnung federbelastet (in den Figuren nicht dargestellt) in die an diesem Abschnitt der Antriebsspindel 5 ebenfalls vorhandene Außenzahnung 33 eingreift. Die Außenzahnung 33 und die Außenzahnung 11 der Antriebsspindel 5 sind gleichsinnig asymmetrisch und mit gleicher Zahnzahl ausgeführt. Gleiches gilt für die Wirkrichtung der Verriegelungsklaue 30 und der Mitnehmerklaue 17. Erreicht wird durch die Verriegelungsratsche 29, dass bei Ausüben eines Rückhubes der Antriebsratsche die Verriegelungsratsche 29 in ihrer sperrenden Position bleibt. Dieses ermöglicht ein Aufbringen auch eines solchen Drehmomentes auf die Antriebsspindel 5 und damit auf das bei dem dargestellten Ausführungsbeispiel als Nuss 8 ausgeführte Spannwerkzeug und auf einen damit zu spannenden Bolzen in einem solchen Maße, dass der Bolzen und/oder die Antriebsspindel 5 tordiert werden. Durch die Sperrwirkung der Verriegelungsratsche 29 ist bei Ausüben eines Rückhubes ein ansonsten unvermeidbares Zurückfedern der in die Antriebsspindel 5 und/oder den Spannbolzen eingebrachten Torsion wirksam verhindert.

Die Verriegelungsklaue 32 ist im Querschnitt T-förmig ausgeführt, wobei der mittlere Abschnitt die mit der Außenzahnung 33 der Antriebsspindel 5 zusammenwirkenden Sperrzähne trägt. Die zu beiden Seiten benachbarten Abschnitte haben jeweils eine Stellfläche, an der ein Stellhebel 34 anliegt. Der Stellhebel 34 dient dem Zweck, die Verriegelungsklaue 29 aus ihrer Eingriffsstellung mit ihren Zähnen der Außenzahnung 33 der Antriebsspindel 5 herauszuführen, wenn die Verriegelung gelöst werden soll. Der Stellhebel 34 ist mit seinem in radialer Richtung außenliegenden Ende in einer Rückstellhebelaufnahme 35 des Verriegelungsträgers 28 gehalten. Der Verriegelungshebel 34 durchgreift, obwohl, wie in Figur 3 gezeigt, gewinkelt ausgeführt, in wesentlichen in radialer Richtung den Verriegelungsträger 28 und ragt mit einem Stellabschnitt 36 in radialer Richtung innenseitig aus dem Verriegelungsträger 28 heraus. Geführt ist der Stellhebel 34 in einem Stellhebelkanal 37 des Verriegelungsträgers 28. Der Verriegelungskanal 37 weist in Umfangsrichtung des Verriegelungsträgers 28 einen hinreichenden Freiraum, um eine Bewegung des Stellhebels 34 zum Wegrücken der Verriegelungsklaue 29 von der Antriebsspindel 5 zu gestatten, und zwar so weit, dass die ansonsten durch die Federbelastung bewirkte Ineingriffstellung der Zähne der Verriegelungsklaue 29 mit der Außenzahnung 33 der Antriebsspindel 5 gelöst werden kann. Radial innenseitig zu dem Verriegelungsträger 28 befindet sich ein Stellring 38, der wiederum eine Rückstellhebelaufnahme 39 für den Stellabschnitt 36 des Stellhebels 34 aufweist. Der Stellring 38 ist, wie in Figur 3 durch einen Pfeil angedeutet, gegenüber dem Verriegelungsträger 28 drehbeweglich verstellbar. Zum Verstellen des Stellringes 28 dient eine Stellstange 40, die an ihrem in den Stellring 38 eingreifenden Endabschnitt einen Stellnocken 41 trägt. Die Stellstange 40 ist durch den Verriegelungsträger 28, den äußeren Ringkörper 27 und durch ein Gehäuse 42 nach außen geführt und trägt an seinem Außengehäuse 42 herausragenden Ende eine Handhabe 43, an der die Stellstange 40 zum Verstellen des Stellringes 38 gedreht werden kann. Figur 3 zeigt den Verriegelungsträger 28 mit seinen Verriegelungsratschen 29 und dem Stellring 38 in Spannstellung des Vielfachschraubwerkzeuges 1, in welche Stellung die Verriegelungsratschen 29 sperrend in die Außenzahnung 33 der Antriebsspindel 5 eingreift.

Zum Zurückrücken der Verriegelungsklauen 30 aus ihrer Eingriffsstellung mit der Außenzahnung 31 der Antriebsspindeln 5 wird die Stellstange 40 mittels der Handhabe um etwa 180 Grad gedreht. Durch den Eingriff des exzentrisch ausgeführten Stellnockens 41 in eine Stellnockenaussparung 44 des Stellringes 38 wird der Stellring 38 gegen den Uhrzeigersinn verstellt, wodurch die an den Stellflächen anliegenden Stellhebel 34 die Verriegelungsklauen 32 von der jeweiligen Antriebsspindel 5 wegrücken. Sollte über die Antriebsspindeln 5 auf die Verriegelungsklauen 32 eine Torsionskraft wirken und das vorbeschriebene Lösen der Verriegelung durch Drehen der Stellstange 40 nicht ohne weiteres möglich sein, wird man durch die Kolben-Zylinderanordnungen 12 zum Ausüben eines Vorhubes ansteuern, um auf diese Weise die auf den Verriegelungsklauen 32 wirkende Torsionskraft zu reduzieren. Dann kann das Vielfachschraubwerkzeug 1 ohne weiteres von den gespannten Spannbolzen bezogen werden.

Durch die Verriegelungseinheit 3 ist es somit möglich, mit dem Vielfachschraubwerkzeug 1 Schraubverbindungen mit einem besonders hohen Drehmoment zu spannen, insbesondere einem solchen, mit dem die Schraubverbindung unter einer gewissen Torsion der Spannpartner verspannt bleibt.

### Die Zustelleinheit

Auf die den Spannwerkzeugen gegenüberliegenden Antriebsabschnitte 7.1 (siehe Figur 1) der Antriebsspindeln 5 wirkt die Zustelleinheit 4. Die Zustelleinheit 4 dient zum Induzieren einer Drehbewegung in die Antriebsspindeln 5, um die auf den Antriebsabschnitten 7 sitzenden Nüsse 8 mit ihrer innenseitigen Mitnahmekontur in eine fluchtende Anordnung der Mitnahmekontur der einzelnen Schraubbolzen zu bringen. Zudem dient die Zustelleinheit 4 dem Zweck, die mit dem Vielfachschraubwerkzeug 1 zu spannenden Schraubbolzen vor dem hydraulischen Spannvorgang auf eine einheitliche Vorspannung zu bringen.

Die Zustelleinheit 4 umfasst ein zentrales Stellrad 45 mit einer zentrisch darin eingebrachten Antriebskontur 46, in die beispielsweise der Vierkant einer Ratsche oder eines anderen manuellen oder elektrischen Werkzeuges eingesetzt werden kann. Durch Drehen des Stellrades 45 können die Antriebsspindeln 5 unter Zwischenschaltung jeweils eines Drehmomentbegrenzers angetrieben werden. Das Stellrad 45 trägt eine Außenzahnung 47, die ein auf dem Antriebsabschnitt 7.1 sitzendes Abtriebsrad 48 kämmt. Das Abtriebsrad 48 verfügt über eine entsprechend komplementäre Zahnung 49 und wirkt mit seiner radialen, zwei Kupplungsflächen aufweisenden Innenseite auf zwei Kupplungsringe 50, 50.1. Die Innenseite des Abtriebsrades 48 ist zu diesem Zwecke konisch verjüngt und wirkt gegen komplementär geneigte Kupplungsflächen der Kupplungsringe 50, 51. Der in Figur 1 obere Kupplungsring 50 wirkt in Richtung der Längsachse der Antriebsspindel 5 gegen eine Widerlagerscheibe 51. Der untere Kupplungsring 50.1 steht unter der Vorspannung einer darauf wirkenden Druckfeder 52, die sich mit ihrem anderen Ende an ein Widerlager abstützt, und wirkt durch diese unter Zwischenschaltung des Abtriebsrades 48 in Richtung des anderen Kupplungsringes 50. Durch die Druckfeder 52 ist somit die Kraftübertragung von dem Abtriebsrad 48 auf die drehmomentschlüssig auf dem Antriebsabschnitt 7.1 der Antriebsspindel 5 sitzenden Kupplungsringe 50, 50.1 begrenzt.

Da das Stellrad 45 in derselben Weise alle Antriebsspindeln 5 antreibt, können mit einem geringen Drehmoment die Antriebsspindeln 5 mit ihren auf dem gegenüberliegenden Antriebsabschnitt 7 sitzenden Spannwerkzeugen in die erforderliche Ineingriffstellung mit beispielsweise dem Kopf eines Spannbolzens gebracht werden. Zudem werden die Spannbolzen durch den Antrieb über das Stellrad 45 in eine gleiche Vorspannung gebracht. Ist ein Schraubbolzen mit einer gewissen Vorspannung angezogen, greift die auf dieser Antriebsspindel 7.1 sitzende Rutschkupplung als Drehmomentbegrenzer, so dass diese Antriebsspindel 5 durch weiteres Drehbewegen des Stellrades 45 nicht weiter gespannt wird, wo hingegen die anderen Antriebsspindeln, die das über den Drehmomentbegrenzer übertragbare Drehmoment noch übertragen werden kann, noch weitergespannt werden, und zwar so lange, bis auch an diesen die Drehmomentbegrenzung durch die vorgespannten Kupplungsscheiben 50, 50.1 greift. Somit wird auf einfache Weise eine gleichmäßige Drehmomentbegrenzung des über das Stellrad 45 auf die Antriebsspindeln 5 übertragenen Drehmoments erreicht.

### Weitere Betriebseinrichtungen

Dem Vielfachschraubwerkzeug 1 sind zu seinem Betrieb ein Hydraulikaggregat sowie eine Steuereinrichtung zum Steuern des Hydraulikaggregates zugehörig. Das Hydraulikaggregat umfasst eine Hydraulikpumpe, einen Fluidtank zum Bevorraten von Hydraulikfluid, typischerweise Hydrauliköl sowie jeweils einen Fluiddruckausgang für den Vorhub und einen weiteren Fluiddruckausgang für den Rückhub. Darüber hinaus verfügt das Hydraulikaggregat über eine Durchflussmesseinrichtung, mit der die geförderte Hydraulikfluidmenge erfassbar ist und bei einem Betrieb des Hydraulikaggregates erfasst wird. Auf Grund der Durchflussmesseinrichtung wird gemäß einer bevorzugten Betriebsweise des Vielfachschraubwerkzeuges das Hydraulikaggregat Fluidfördermengen abhängig gesteuert. Dieses gewährleistet, dass eine Umschaltung von einem Vorhub in einen Rückhub der hydraulischen Stellzylinder des Vielfachschraubwerkzeuges erst erfolgt, wenn die vordefinierte Hydraulikfluidmenge gefördert ist. Diese vordefinierte Hydraulikfluidfördermenge entspricht demjenigen Hydraulikfluidvolumen, welches benötigt wird, um den in jedem hydraulischen Stellzylinder angeordneten Kolben von seiner einen Endstellung in seine andere Endstellung zu bewegen. Dadurch ist sichergestellt, dass eine Umschaltung von einer Vorhubbewegung in eine Rückhubbewegung erst erfolgt, wenn tatsächlich alle Kolben der Ratschenantriebe gleichermaßen bewegt worden sind. Gleiches gilt für eine Umschaltung von einer Rückhubbewegung in eine Vorhubbewegung. Bei einer solchen Steuerung des Hydraulikaggregates ist es somit unerheblich, ob in allen Stellzylindern der gewünschte Hub synchron oder mit geringem zeitlichem Versatz ausgeführt wird. Um die diesbezügliche Hydraulikfluidmenge bestimmen zu können, wird das Vielfachschraubwerkzeug vor seinem eigentlichen Spanneinsatz einige Male zum Ausüben eines Hubes betätigt. Dabei wird das jeweils geförderte Fluidvolumen erfasst. Durch mehrfaches Wiederholen wird ein verlässlicher Fluidfördervolumenreferenzwert erhalten. Diese Fluidfördermenge bestimmt sodann den Umschaltzeitpunkt. Wenn bei einer solchen Betriebsweise des Hydraulikaggregates des Vielfachschraubwerkzeuges die zum Umschalten von einer Vorhubbewegung in eine Rückhubbewegung notwendige Hydraulikfluidfördermenge nicht mehr gefördert werden konnte, weil zumindest eine der zu spannenden Schraubverbindungen bereits hinreichend gespannt ist, und somit der Stellzylinder mit dem anliegenden Hydraulikdruck nicht weiterbewegt werden kann, schaltet das Hydraulikaggregat typischerweise ab. Wird kein Hydraulikfluid mehr gefördert, sind alle Schraubverbindungen auf Grund des gleichbleibenden Hydrauliköldruckes mit gleichem Drehmoment gespannt. Diejenige Kraft, mit der die Schraubverbindungen gespannt werden, ist bei dieser Betriebsweise abhängig von dem Druck, mit dem das Hydraulikfluid gefördert wird. Mit einem solchen Vielfachschraubwerkzeug lassen sich Schraubverbindungen auch mit sehr hohen Drehmomenten spannen.

Ein Betrieb des Hydraulikaggregates und damit des Vielfachschraubwerkzeuges kann auch auf unterschiedlichen Druckstufen erfolgen. Möglich ist es, einen ersten Spannschritt nur mit einem geringen Hydraulikdruck (wenige bar) durchzuführen. Dieser Schritt des Spannens lediglich dient dazu, dass die Spannwerkzeuge mit ihrer Mitnehmerkontur die komplementären anzutreibenden Spannelemente, beispielsweise den Kopf eines Bolzens finden und dass sämtliche Schraubverbindungen bezüglich ihrer Verspannungsstellung in einen gleichen Ausgangszustand gebracht werden. Ist dieser erreicht, erfolgt das eigentliche Spannen der Schraubverbindungen. Hierfür wird der Hydraulikdruck des Hydraulikaggregates auf den dem aufzubringenden Drehmoment entsprechenden Druck gebracht. Hierbei können durchaus Drücke von 600 bis 800 bar angelegt werden. Selbstverständlich ist es auch möglich, höhere Drucke bereitzustellen. Der Spannvorgang wird mit Hilfe der bereits vorstehend beschriebenen Fluidfördermengen abhängigen Umsteuerung durchgeführt.

**Bezugszeichenliste**

| | | | |
|---|---|---|---|
| 1 | Vielfachschraubwerkzeug | 31 | Durchbrechung |
| 2 | Antriebsblock | 32 | Verriegelungsklaue |
| 3 | Verriegelungseinheit | 33 | Außenzahnung |
| 4 | Zustelleinheit | 34 | Stellhebel |
| 5 | Antriebsspindel | 35 | Rückstellhebelaufnahme |
| 6, 6.1 | Blockscheibe | 36 | Stellabschnitt |
| 7, 7.1 | Antriebsabschnitt | 37 | Stellhebelkanal |
| 8 | Nuss | 38 | Stellring |
| 9 | Druckfeder | 39 | Rückstellhebelaufnahme |
| 10 | Verriegelungsring | 40 | Stellstange |
| 11 | Außenzahnung | 41 | Stellnocken |
| 12 | Kolben-Zylinderanordnung | 42 | Gehäuse |
| 13 | Kolbenstange | 43 | Handhabe |
| 13.1 | Kolben | 44 | Stellnockenaussparung |
| 14 | Ratschenhebel | 45 | Stellrad |
| 15 | Zylindergehäuse | 46 | Antriebskontur |
| 16 | Fluidanschluss | 47 | Außenzahnung |
| 17 | Mitnehmerklaue | 48 | Abtriebsrad |
| 18 | Ringkanal | 49 | Zahnung |
| 19 | Fluidverteiler | 50, 50.1 | Kupplungsring |
| 20 | Querbohrung | 51 | Widerlagerscheibe |
| 21 | Abschnitt | 52 | Druckfeder |
| 22 | Querbohrung | | |
| 23 | Fluidkanal | | |
| 24 | Ringkammer | | |
| 25 | Fluidverteiler | | |
| 26 | Ringkanal | | |
| 27 | Ringkörper | | |
| 28 | Ringkörper/Verriegelungsträger | | |
| 29 | Verriegelungsratsche | | |
| 30 | Verriegelungskammer | | |

## Patentansprüche

1. Vielfachschraubwerkzeug mit mehreren, um ein Zentrum angeordneten, endseitig mit jeweils einem Spannwerkzeug (8) bestückbaren oder bestückten Antriebsspindeln (5) und einem jeder Antriebsspindel (5) zugeordneten, mittels eines hydraulischen Kolbenantriebs angetriebenen Ratschenantrieb zum Antreiben der Antriebsspindeln, **dadurch gekennzeichnet, dass** auf jede Antriebspindel (5) zusätzlich zu dem Ratschenantrieb eine Verriegelungsratsche (29) zum Verriegeln der Antriebsspindel (5) gegen ein Zurückdrehen beim Ausüben einer Rückhubbewegung der Antriebsratsche wirkt, welche Verriegelungsratschen (29) in einem von den Antriebsspindeln (5) durchgriffenen Verriegelungsträger (28) angeordnet sind, und dass der Verriegelungsträger (28) über Mittel zum Lösen der Verriegelungsratschen verfügt.

2. Vielfachschraubwerkzeug nach Anspruch 1, **dadurch gekennzeichnet, dass** jede Antriebsspindeldurchbrechung (31) des Verriegelungsträgers (28) eine Verriegelungskammer (30) umfasst, in der eine federbelastet auf die Antriebsspindel (5) wirkende Verriegelungsklaue (32) aufgenommen ist.

3. Vielfachschraubwerkzeug nach Anspruch 2, **dadurch gekennzeichnet, dass** die Verriegelungsklaue (32) wenigstens eine zur Antriebsspindel (5) weisende Stellfläche aufweist, an der ein Rückstellhebel (34) zum Herausrücken der Verriegelungsklaue (32) aus ihrer Verriegelungsstellung der Antriebsspindel (5) anliegt.

4. Vielfachschraubwerkzeug nach Anspruch 3, **dadurch gekennzeichnet, dass** die Verriegelungsklaue (32) zwei Stellflächen aufweist, die einen mittleren, die Zähne der Verriegelungsklaue (32) tragenden Teil einfassen.

5. Vielfachschraubwerkzeug nach Anspruch 3 oder 4, **dadurch gekennzeichnet, dass** der jeder Verriegelungsratsche (29) zugeordnete Rückstellhebel (34) mit seinem einem Ende in eine Rückstellhebelaufnahme (35) des Verriegelungsträgers (28) und mit seinem anderen Ende in radialer Richtung über den Verriegelungsträger (28) hervorsteht und in eine Rückstellhebelaufnahme (39) eines Stellringes (38) eingreift, der zum Verstellen der Rückstellhebel (34) konzentrisch zum Verriegelungsträger (28) drehbar ist.

6. Vielfachschraubwerkzeug nach Anspruch 5, **dadurch gekennzeichnet, dass** der Stellring (38) radial innenseitig zu dem Verriegelungsträger (28) angeordnet ist und eine Stellnockenaussparung (44) aufweist, in der eine Stellnocke (41) zum Verstellen des Stellringes (38) gegenüber dem Verriegelungsträger (28) drehbar gehalten ist.

7. Vielfachschraubwerkzeug nach Anspruch 6, **dadurch gekennzeichnet, dass** der Stellnocken (41) auf einer sich in radialer Richtung erstreckenden, den Verriegelungsträger (28) durchgreifenden Stellstange (40) mit einer Handhabe (43) an seinem in radialer Richtung aus dem Verriegelungsträger (28) herausgeführten Ende sitzt.

8. Vielfachschraubwerkzeug nach einem der Ansprüche 5 bis 7, **dadurch gekennzeichnet, dass** die Rückstellhebel (34) eine zu einer Stellfläche der Verriegelungsklaue (32) weisende Kante aufweist, ausgehend von der sich ein erster Arm des Rückstellhebels (34) bis in die Rückstellträgeraufnahme (35) des Verriegelungsträgers (28) und ein zweiter Arm des Rückstellhebels (34) bis in eine Rückstellhebelaufnahme (39) des Stellrings (38) erstreckt.

9. Vielfachschraubwerkzeug nach einem der Ansprüche 1 bis 8, **dadurch gekennzeichnet, dass** die Antriebsspindeln (5) in einem Antriebsblock (2) drehbar gelagert und gehalten sind und an jedem Ende einen von dem Antriebsblock (2) vorstehenden Antriebsabschnitt (7, 7.1) aufweisen, wobei die Antriebsabschnitte (7, 7.1) der Antriebsspindeln (5) auf der einen Seite des Antriebsblockes (2) zum Tragen der Spannwerkzeuge (8) dienen, in welchem Antriebsblock (2) die Kolben (13.1) der Kolbenantriebe in Zylindergehäusen (15) translatorisch in beide Richtungen verstellbar geführt sind, wobei die Kolbenstangen (13) zum Übertragen einer Vorhubbewegung und einer Rückhubbewegung auf jeweils einen eine Mitnehmerklaue (17) aufweisenden Ratschenhebel (14) kinematisch mit dem Ratschenhebel (14) verbunden sind, und welcher Antriebsblock (2) in seinem Zentrumsbereich zumindest einen Fluidverteilerhohlraum (18, 24) aufweist, in den mehrere in dem Antriebsblock (2) befindlichen Fluidkanäle münden, wobei durch jeden Fluidkanal eine Fluidverbindung zwischen dem Fluidverteilerhohlraum (18, 24) und einem ersten Fluideingang eines Zylindergehäuses (15) hergestellt ist, und dass an einer Flachseite des Antriebsblockes (2) ein Fluidverteiler (25) mit einem an einen Fluidzufuhrkanal angeschlossenen Ringkanal (26) als Fluidverteilerhohlraum angeordnet ist, in welchen Fluidverteilerhohlraum mehrere Fluidkanäle münden, wobei durch jeden Fluidkanal eine Fluidverbindung zwischen dem Fluidverteilerhohlraum (26) und einen zweiten Fluideingang eines Zylindergehäuses (15) hergestellt ist.

10. Vielfachschraubwerkzeug nach Anspruch 9, **dadurch gekennzeichnet, dass** der im Zentrumsbereich des Antriebsblockes (2) befindliche Fluidverteilerhohlraum als Ringkanal (18, 24) ausgeführt ist.

11. Vielfachschraubwerkzeug nach einem der Ansprüche 9 bis 10, **dadurch gekennzeichnet, dass** der Antriebsblock (2) aus zumindest zwei Blockscheiben zusammengesetzt ist, wobei in jeder Blockscheibe (6, 6.1) mehrere Ratschenantriebe angeordnet sind.

12. Vielfachschraubwerkzeug nach Anspruch 11, **dadurch gekennzeichnet, dass** ein Fluidverteilerhohlraum (18, 24) jedem der beiden Blockscheiben (6, 6.1) zugeordnet ist und die beiden Fluidverteilerhohlräume (18, 24) durch einen Fluidverteiler (19) in Fluidverbindungen miteinander gestellt sind.

13. Vielfachschraubwerkzeug nach einem der Ansprüche 1 bis 12, **dadurch gekennzeichnet, dass** das Vielfachschraubwerkzeug (1) eine Zustelleinheit (4) zum Induzieren einer Drehbewegung in die Antriebsspindeln (5) mit einem um die Achse des Zentrums der ringförmigen Anordnung der Antriebsspindeln (5) drehbar gelagerten Stellrad (45) als Antriebsrad umfasst, das jeweils ein auf einer Antriebsspindel (5) sitzendes Abtriebsrad (48) antreibt, wobei die Übertragung der Antriebsbewegung des Stellrades (45) auf die Antriebsspindel (5) unter Zwischenschaltung jeweils eines Drehmomentbegrenzers erfolgt.

14. Vielfachschraubwerkzeug nach Anspruch 13, **dadurch gekennzeichnet, dass** der drehmomentbegrenzten Kraftübertragung der Antriebskraft auf die Antriebsspindeln (5) die Abtriebsräder (48) unter Zwischenschaltung einer Rutschkupplung auf den Antriebsspindeln (5) sitzen und mit einem Zahnkranz (49) eine Außenzahnung (47) des Stellrades (45) kämmen.

15. Vielfachschraubwerkzeug nach Anspruch 14, **dadurch gekennzeichnet, dass** die Rutschkupplung jeder Antriebsspindel (5) zwei drehmomentschlüssig auf der Antriebsspindel (5) sitzende Kupplungsscheiben (50, 50.1) mit jeweils einer gegenüber der Längserstreckung der Antriebsspindel (5) geneigten Kupplungsfläche, welche Kupplungsflächen zur Ausbildung einer Abtriebsradaufnahme zueinander geneigt sind, und das Abtriebsrad umfasst, das mit seiner zu den Kupplungsflächen komplementär ausgestalteten Innenseite in die Abtriebsradaufnahme eingreift und unter Vorspannung an den Kupplungsflächen der Kupplungsschreiben (50, 50.1) anliegt.

## Claims

1. Multiple screwdriver with a plurality of drive spindles (5) that are arranged around a centre and are equipped or able to be equipped at the end with a respective clamping tool (8) and a ratchet drive, assigned to each drive spindle (5) and driven by means of a hydraulic piston drive, for driving the drive spindles, **characterised in that,** in addition to the ratchet drive, a locking ratchet (29) acts on each drive spindle (5) in order to lock the drive spindle (5) against turning back when a return stroke movement of the drive ratchet is exerted, which locking ratchets (29) are arranged in a locking carrier (28) through which the drive spindles (5) pass, and that the locking carrier (28) is provided with means for releasing the locking ratchets.

2. Multiple screwdriver according to claim 1, **characterised in that** each drive spindle passage opening (31) of the locking carrier (28) comprises a locking chamber (30), in which a locking claw (32) is accommodated, which takes effect under spring loading on the drive spindles (5).

3. Multiple screwdriver according to claim 2, **characterised in that** each locking claw (32) comprises at least one adjustment surface, facing towards the drive spindle (5), with which a resetting lever (34) is in contact for moving the locking claw (32) out of its locking position in respect of the drive spindles (5).

4. Multiple screwdriver according to claim 3, **characterised in that** the locking claw (32) comprises two adjustment surfaces, which include a middle part carrying the teeth of the locking claw (32).

5. Multiple screwdriver according to claim 3 or 4, **characterised in that** the resetting lever (34) assigned to each locking ratchet (29) projects with one end into a resetting lever receiver (35) of the locking carrier (28) and with the other end in the radial direction over the locking carrier (28) and engages into a resetting lever receiver (39) of an adjustment setting ring (38), which can be rotated in order to adjust the resetting lever (34) concentrically to the locking carrier (28).

6. Multiple screwdriver according to claim 5, **characterised in that** the setting ring (38) is arranged radially on the inside in relation to the locking carrier (28), and comprises a setting cam cutout opening (44), in which a setting cam (41) is held in a rotatable manner such as to adjust the setting ring (38) in relation to the locking carrier (28).

7. Multiple screwdriver according to claim 6, **characterised in that** the setting cam (41) is mounted on a setting rod (40), extending in the radial direction and engaging through the locking carrier (28), with a handle (43) at its end projecting in the radial direction out of the locking carrier (28).

8. Multiple screwdriver according to any one of claims 5 to 7, **characterised in that** the resetting lever (34) comprises an edge facing a setting surface of the locking claw (32), extending out of which is a first arm of the resetting lever (34), extending as far as into the resetting carrier receiver (35) of the locking carrier (28), and a second arm of the resetting lever (34) extends as far as into a resetting lever receiver (39) of the setting ring (38).

9. Multiple screwdriver according to any one of claims 1 to 8, **characterised in that** the drive spindles (5) are mounted and held rotatably in a drive block (2), and comprise at each end a drive section (7, 7.1) projecting from the drive block (2), wherein the drive sections (7, 7.1) of the drive spindles (5) on the one side of the drive block (2) serve to carry the tensioning tools (8), in which drive block (2) the pistons (13.1) of the piston drives are guided in cylinder housings (15), such as to be adjustable in a translational manner in both directions, wherein, in order to transfer a forwards stroke movement and a backwards stroke movement in each case onto a ratchet lever (14), comprising a driver claw (17), the piston rods (13) are kinematically connected to the ratchet lever (14), and which drive block (2) comprises in its centre at least one fluid distribution cavity (18, 24), into which several fluid channels open, located in the drive block (2), wherein, through each fluid channel, a fluid connection is established between the fluid distribution cavity (18, 24) and a first fluid intake of a cylinder housing (15), and that, on a flat side of the drive block (2), a fluid divider (25) is arranged, with a ring channel (26) connected to a fluid delivery channel, as a fluid distribution cavity, into which fluid distribution cavity several fluid channels open, wherein, through each fluid channel, a fluid connection is established between the fluid distribution cavity (26) and a second fluid inlet of a cylinder housing (15).

10. Multiple screwdriver according to claim 9, **characterised in that** the fluid distributor cavity located in the centre region of the drive block (2) is configured as a ring channel (18, 24).

11. Multiple screwdriver according to any one of claims 9 to 10, **characterised in that** the drive block (2) is composed of at least two block disks, wherein several ratchet drives are arranged in each block disk (6, 6.1).

12. Multiple screwdriver according to claim 11, **characterised in that** a fluid distribution cavity (18, 24) is arranged in each of the two block disks (6, 6.1), and the two fluid distribution cavities (18, 24) are set in fluid connection with one another by means of a fluid distributor (19).

13. Multiple screwdriver according to any one of claims 1 to 12, **characterised in that** the multiple screwdriver (1) comprises an adjustment unit (4) for inducing a rotational movement into the drive spindles (5), with an adjustment wheel (45) as a drive wheel, mounted such as to be rotatable about the axis of the centre of the ring-shaped arrangement of the drive spindles (5), which in each case drives a power take-off wheel (48) located in each case on a drive spindle (5), wherein the transfer of the drive movement of the adjustment wheel (45) onto the drive spindles (5) takes place in each case with the engagement of a torque limiter.

14. Multiple screwdriver according to claim 13, **characterised in that,** for the torque-limited force transfer of the drive force onto the drive spindles (5), the drive wheels (48) are located on the drive spindles (5) with the intermediate engagement of a slip clutch, and with a toothed rim (49) mesh with an outer tooth arrangement (47) of the adjustment wheel (45).

15. Multiple screwdriver according to claim 14, **characterised in that** the slip clutch of each drive spindle (5) comprises two clutch disks (50, 50.1), located torque-locked on the drive spindle (5), with in each case a clutch surface inclined in relation to the longitudinal extension of the drive spindle (5), which clutch surfaces are inclined towards one another in order to form a receiver for the power take-off wheel, and also comprises the power take-off wheel, which engages with its inner side, configured to be complementary with the clutch surfaces, into the power take-off wheel receiver, and is in contact under preliminary tension with the clutch surfaces of the clutch disks (50, 50.1).

## Revendications

1. Outil de vissage multiple comportant plusieurs broches d'entraînement (5) disposées autour d'un centre, respectivement équipées ou pouvant être équipées à leur extrémité d'un outil de serrage (8) et avec, affecté à chaque broche d'entraînement (5), un mécanisme à cliquet destiné à entraîner les broches d'entraînement par un mécanisme à piston hydraulique, **caractérisé en ce que** sur chaque broche d'entraînement (5) agit, en plus du mécanisme à cliquet, un cliquet de verrouillage (29) destiné à verrouiller la broche d'entraînement (5) pour l'empêcher de tourner en arrière lorsque s'effectue un mouvement de retour du cliquet, lesquels cliquets de verrouillage (29) sont disposés dans un support de verrouillage (28) traversé par les broches d'entraînement (5) et **en ce que** le support de verrouillage (28) dispose de moyens pour débloquer les cliquets de verrouillage.

2. Outil de vissage multiple selon la revendication 1, **caractérisé en ce que** chaque traversée (31) de broche d'entraînement du support de verrouillage (28) comprend un compartiment de verrouillage (30) dans lequel est logée une griffe de verrouillage (32) agissant par effet ressort sur la broche d'entraînement (5).

3. Outil de vissage multiple selon la revendication 2, **caractérisé en ce que** la griffe de verrouillage (32) présente au moins une surface d'ajustage orientée vers la broche d'entraînement (5), sur laquelle s'appuie un levier de rappel (34) destiné à repousser la griffe de verrouillage (32) de sa position de verrouillage de la broche d'entraînement (5).

4. Outil de vissage multiple selon la revendication 3, **caractérisé en ce que** la griffe de verrouillage (32) présente deux surfaces d'ajustage qui entourent une partie centrale supportant les dents de la griffe de verrouillage (32).

5. Outil de vissage multiple selon la revendication 3 ou 4, **caractérisé en ce que** le levier de rappel (34) affecté à chaque cliquet de verrouillage (29) dépasse par l'une de ses extrémités vers un logement de levier de rappel (35) du support de verrouillage (28) et par son autre extrémité, dans le sens radial, sur le support de verrouillage (28) et s'engage dans un logement de support de verrouillage (39) d'une bague d'ajustage (38), laquelle est rotative afin d'ajuster de manière concentrique le levier de rappel (34) par rapport au support de verrouillage (28).

6. Outil de vissage multiple selon la revendication 5, **caractérisé en ce que** la bague d'ajustage (38) est disposée radialement à l'intérieur vers le support de verrouillage (28) et qu'elle présente un évidement pour toc de positionnement (44), dans lequel est maintenu en rotation un toc de positionnement (41) destiné à modifier la position de la bague d'ajustage (38) par rapport au support de verrouillage (28).

7. Outil de vissage multiple selon la revendication 6, **caractérisé en ce que** le toc de positionnement (41) est maintenu sur une barre de réglage (40) s'étendant dans le sens radial, traversant le support de verrouillage (28), munie d'un bouton de manipulation (43) à son extrémité, ressortant dans le sens radial du support de verrouillage (28).

8. Outil de vissage multiple selon l'une des revendications 5 à 7, **caractérisé en ce que** les leviers de rappel (34) présente une arête orientée vers une surface d'ajustage de la griffe de verrouillage (32), à partir de laquelle arête s'étend un premier bras du levier de rappel (34) jusque dans le logement du levier de rappel (35) du support de verrouillage (28) et un second bras du levier de rappel (34) jusque dans un logement de levier de rappel (39) de la bague d'ajustage (38).

9. Outil de vissage multiple selon l'une des revendications 1 à 8, **caractérisé en ce que** les broches d'entraînement (5) sont logées en rotation et maintenues dans un bloc de transmission (2) et présentent à chaque extrémité un tronçon d'entraînement (7, 7.1) en saillie par rapport au bloc de transmission (2), les tronçons d'entraînement (7, 7.1) des broches d'entraînement (5) servant sur un côté du bloc de transmission (2) à supporter les outils de serrage (8), dans lequel bloc de transmission (2) les pistons (13.1) des mécanismes à piston sont guidés dans des corps de cylindre (15) de façon à pouvoir être déplacés en translation dans les deux directions, les tiges de piston (13) étant raccordées cinématiquement, afin de transmettre un mouvement d'avance et un mouvement de retour sur respectivement un levier à cliquet (14) présentant une griffe de toc d'entraînement (17), avec le levier à cliquet (14), et lequel bloc de transmission (2) présente dans sa zone centrale au moins une cavité de répartition de fluide (18, 24), dans laquelle débouchent plusieurs canaux de fluides se trouvant dans le bloc de transmission (2), chaque canal de fluide assurant une liaison de fluide entre la cavité de répartition de fluide (18, 24) et une première arrivée de fluide d'un corps de cylindre (15), et **en ce qu'**un répartiteur de fluide (25), est disposé sur un côté plan du bloc de transmission (2) et comporte un canal circulaire (26), faisant office de cavité de répartition de fluide, raccordé à un canal d'acheminement de fluide, dans laquelle cavité de répartition de fluide débouchent plusieurs canaux de fluide, chaque canal de fluide assurant une liaison de fluide entre la cavité de répartition de fluide (26) et une seconde arrivée de fluide d'un corps de cylindre (15).

10. Outil de vissage multiple selon la revendication 9, **caractérisé en ce que** la cavité de répartition de fluide se trouvant dans la zone centrale du bloc de transmission (2) est conformée en canal circulaire (18, 24).

11. Outil de vissage multiple selon l'une des revendications 9 à 11, **caractérisé en ce que** le bloc de transmission (2) est assemblé à partir d'au moins deux disques de bloc, plusieurs mécanismes à cliquet étant disposés dans chaque disque de bloc (6, 6.1).

12. Outil de vissage multiple selon la revendication 11, **caractérisé en ce qu'une** cavité de répartition de fluide (18, 24) est affectée à chacun des deux disques de bloc (6, 6.1) et les deux cavités de répartition de fluide (18, 24) sont mises en liaison de fluide grâce à un répartiteur de fluide (19).

13. Outil de vissage multiple selon l'une des revendications 1 à 12, **caractérisé en ce que** l'outil de vissage multiple (1) comprend une unité de distribution destinée à induire un mouvement de rotation sur les broches d'entraînement (5) à l'aide d'une roue de commande (45), logée de manière rotative sur l'axe du centre de l'agencement circulaire des broches d'entraînement (5), faisant office de roue d'entraînement, laquelle entraîne une roue de sortie (48) logée sur une broche d'entraînement (5), la transmission du mouvement d'entraînement de la roue de commande (45) sur la broche d'entraînement (5) étant réalisée par l'intermédiaire d'un limiteur de couple.

14. Outil de vissage multiple selon la revendication 13, **caractérisé en ce que,** afin de transmettre sur les broches d'entraînement (5) la force d'entraînement avec limiteur de couple, les roues de sortie (48) sont logées sur les broches d'entraînement (5) par l'intermédiaire d'un accouplement à glissement et s'engagent par une roue dentée (49) dans une denture extérieure (47) de la roue de commande (45).

15. Outil de vissage multiple selon la revendication 14, **caractérisé en ce que** l'accouplement à glissement de chaque broche d'entraînement (5) comprend la roue de sortie et deux disques d'accouplement (50, 50.1) logés de manière solidaire en rotation sur la broche d'entraînement (5), comportant respectivement une surface d'accouplement inclinée par rapport à l'étendue longitudinale de la broche d'entraînement (5), lesquelles surfaces d'accouplement sont inclinées l'une vers l'autre afin de former un logement de roue de sortie, laquelle roue de sortie s'engage par sa face intérieure conformée de manière complémentaire par rapport aux surfaces d'accouplement dans le logement de roue de sortie et qui est en appui avec précontrainte contre les surfaces d'accouplement des disques d'accouplement (50, 50.1).
